# FASCICULE DE BREVET EUROPEEN

(11) **EP 0 757 170 B1**
(45) Date de publication et mention de la délivrance du brevet: **13.09.2000**
(21) Numéro de dépôt: 96401474.0
(22) Date de dépôt: 04.07.1996
(51) Int. Cl.: F02K 1/56

(54) **Inverseur de poussée de turboréacteur à une coquille**
Schubumkehrvorrichtung für ein Strahltriebwerk, mit einer Klappe
Jet engine thrust reverser with a single door

(30) Priorité: 05.07.1995 FR 9508092
(43) Date de publication de la demande: 05.02.1997
(73) Titulaire: Hispano-Suiza Aérostructures, 76700 Gonfreville l'Orcher (FR)
(72) Inventeur: Metezeau, Fabrice Henri Emile, 76600 Le Havre (FR); Vauchel, Guy Bernard, 76610 Le Havre (FR)
(74) Mandataire: Berrou, Paul

(56) Documents cités:
- EP-A- 0 131 079
- EP-A- 0 150 649
- EP-A- 0 345 834
- FR-A- 1 153 561
- GB-A- 2 075 447
- US-A- 3 640 468

## Description

La présente invention concerne un inverseur de poussée pour turboréacteur, du type monté en aval du turboréacteur.
FR-A-2 622 928 illustre un exemple d'inverseur de poussée disposé en position aval et réalisant l'inversion de poussée du flux secondaire ou flux froid d'un turboréacteur à double flux. Sur ce type d'inverseur, des obstacles aval ou coquilles, en plus d'assurer l'inversion soit du flux secondaire soit de l'ensemble des flux, forment également la tuyère d'éjection lors du fonctionnement en poussée directe. Le bord aval desdits obstacles constitue par conséquent dans ce cas l'extrémité aval de la paroi externe du canal, notamment du canal annulaire de circulation de la veine de flux secondaire dans l'application à un turboréacteur à double flux. Dans les réalisations connues de ce type, les obstacles sont montés pivotants sur la structure fixe de l'inverseur.

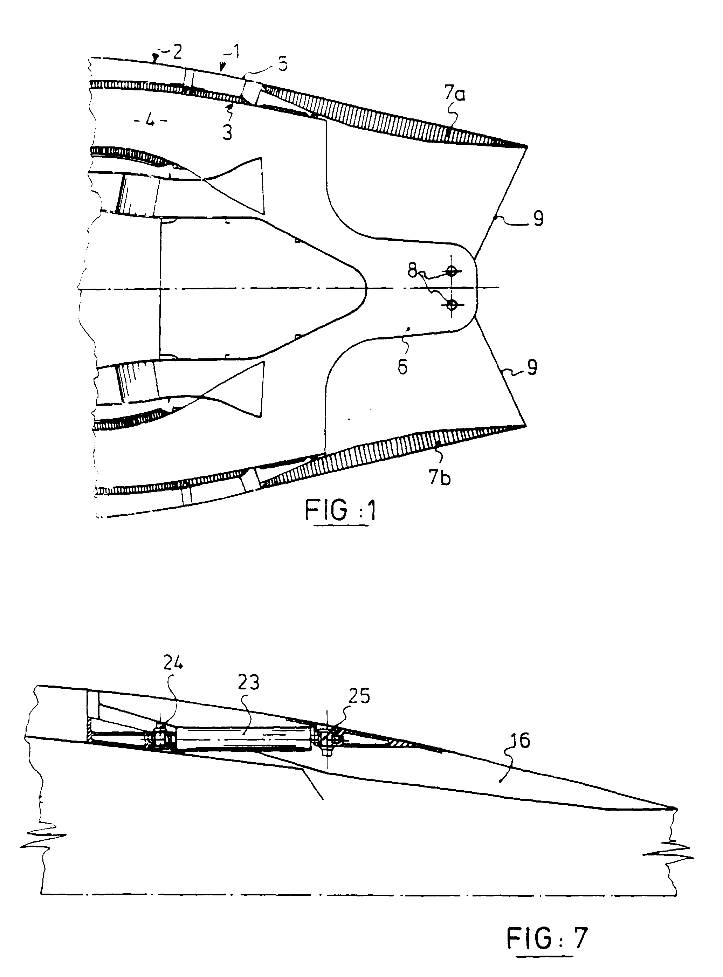

La figure 1 des dessins annexés montre un exemple de réalisation de ce type connu d'inverseur de poussée. L'inverseur de poussée est constitué dans ce cas d'une structure fixe amont 1 fixée sur le turboréacteur 2 ou sa nacelle et comportant une paroi interne 3 délimitant extérieurement le canal annulaire de circulation de la veine fluide, un carénage externe 5 fixé sur la paroi interne 3 et deux structures latérales 6. Deux obstacles aval 7a et 7b sont montés pivotants sur la structure fixe, notamment au moyen de pivots 8 portés par les structures latérales 6 qui supportent également un système de commande des déplacements et de verrouillage des obstacles 7a et 7b. L'extrémité aval 9 des obstacles 7a et 7b constituent le bord de fuite de la paroi externe, en prolongement vers l'aval du carénage 5, n'est pas coplanaire.

Un problème posé par ce type d'inverseur de poussée est de laisser subsister lors du fonctionnement en poussée directe lorsque les obstacles sont intégrés au canal dans le prolongement d'une partie fixe des pertes aérodynamiques qui peuvent être importantes et qui portent un grave préjudice à l'obtention des performances recherchées. Des solutions ont déjà été proposées pour tenter d'y remédier. Ainsi, FR-A-2 638 783 propose d'adjoindre à l'inverseur des volets latéraux mobiles, ce qui impose des articulations et présente l'inconvénient d'accroître la complexité préjudiciable à la fiabilité et d'augmenter la masse, à l'encontre de la réduction toujours recherchée pour des applications aéronautiques.

De même, FR-A-2 601 077 prévoit une structure fixe en aval des obstacles de l'inverseur. De ce fait, l'allongement du canal et les dispositions nécessaires pour permettre les déplacements des obstacles et l'obtention d'une ouverture suffisante en position d'inversion de poussée, en amont de ladite structure fixe entraînent également une augmentation de masse.

On connaît également par FR-A-2 672 339 une solution utilisant en plus des obstacles pivotants un élément en virole translatable disposée du côté aval, ce qui amène les inconvénients déjà relevés.

Une autre solution est montrée dans le document EP-A-0 131 079.

Le but de l'invention est de supprimer les pertes aérodynamiques en jet direct, en évitant un bord de fuite non coplanaire à l'extrémité aval du canal, sans encourir les inconvénients d'accroissement de masse ou de complexification du dispositif et de la cinématique associée que présentent les solutions connues antérieures.
Un inverseur de poussée de turboréacteur à obstacle aval permettant de répondre à ces conditions est caractérisé en ce que la structure fixe amont comporte une extrémité aval présentant un bord qui n'est pas contenu dans un plan perpendiculaire à l'axe géométrique de rotation du turboréacteur, la partie mobile est constituée par une unique coquille disposée, lors du fonctionnement en poussée directe, jointive et dans le prolongement aval de ladite structure fixe de manière à constituer en position fermée la partie aval de la tuyère d'éjection du flux direct comportant un bord de fuite coplanaire et en outre, susceptible de pivoter autour de deux pivots latéraux situés de part et d'autre de ladite structure fixe sous l'action d'un système de commande des déplacements comportant au moins un vérin monté entre deux pivots solidaires l'un de ladite structure fixe et l'autre de ladite coquille de manière à constituer, en position déployée, un obstacle de déviation du flux des gaz en procurant une inversion de poussée. D'autres caractéristiques et avantages de l'invention seront mieux compris à la lecture de la description qui va suivre des modes de réalisation de l'invention, en référence aux dessins annexés sur lesquels :
- la figure 1 précédemment décrite représente selon une vue schématique en coupe longitudinale par un plan passant par l'axe de rotation la partie arrière d'un turboréacteur équipé d'un inverseur de poussée à obstacles aval antérieurement connu ;
- la figure 2 représente selon une vue schématique analogue à celle de la figure 1 un inverseur de poussée suivant un mode de réalisation de l'invention dans la configuration correspondant à un fonctionnement en poussée directe ;
- la figure 3 représente selon une vue schématique analogue à celles des figures 1 et 2 l'inverseur de poussée représenté sur la figure 2 dans la configuration correspondant à un fonctionnement en inversion de poussée ;
- la figure 4 représente selon une vue schématique en perspective l'inverseur de poussée de la figure 2 en position de poussée directe ;
- la figure 5 représente selon une vue schématique en perspective l'inverseur de poussée de la figure 3 en position d'inversion de poussée ;
- la figure 6 représente selon une vue schématique analogue à celle des figures 2 et 3 l'inverseur de poussée des figures 2 à 5 avec son système de commande ;
- la figure 7 représente selon une vue schématique partielle en coupe suivant un plan passant par la ligne VII-VII de la figure 6 un détail du système de commande ;
- la figure 8 représente selon une vue schématique analogue à celles des figures 2, 3, et 6 l'inverseur de poussée conforme à l'invention associé à un dispositif de tuyère variable.

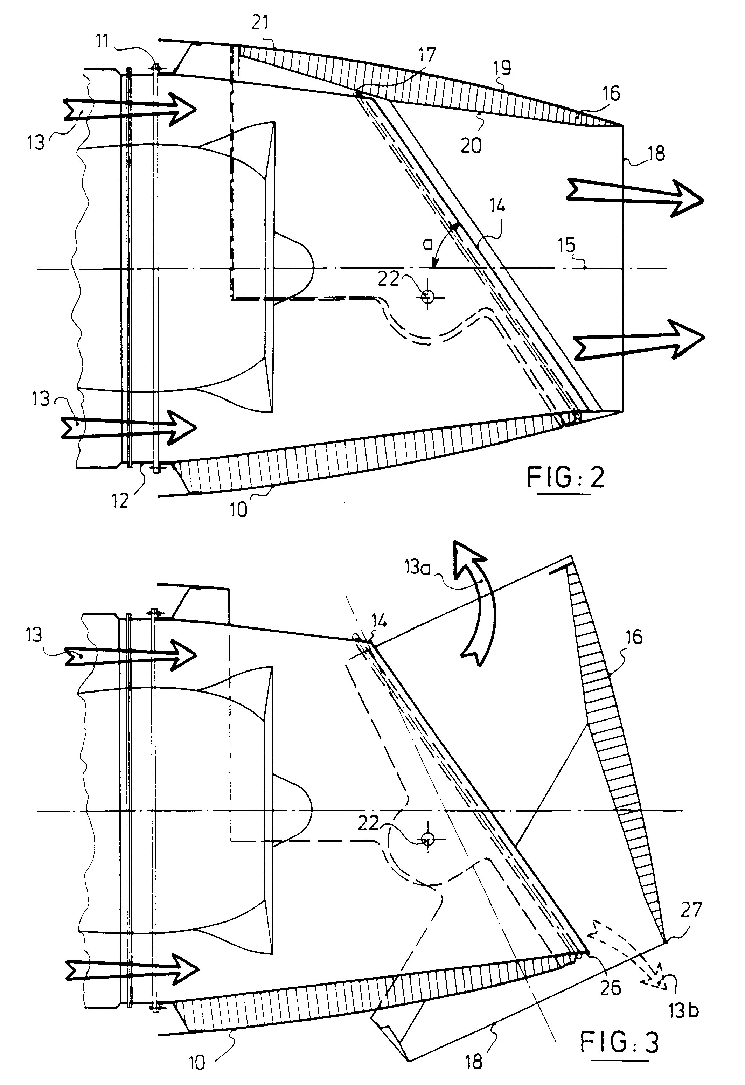

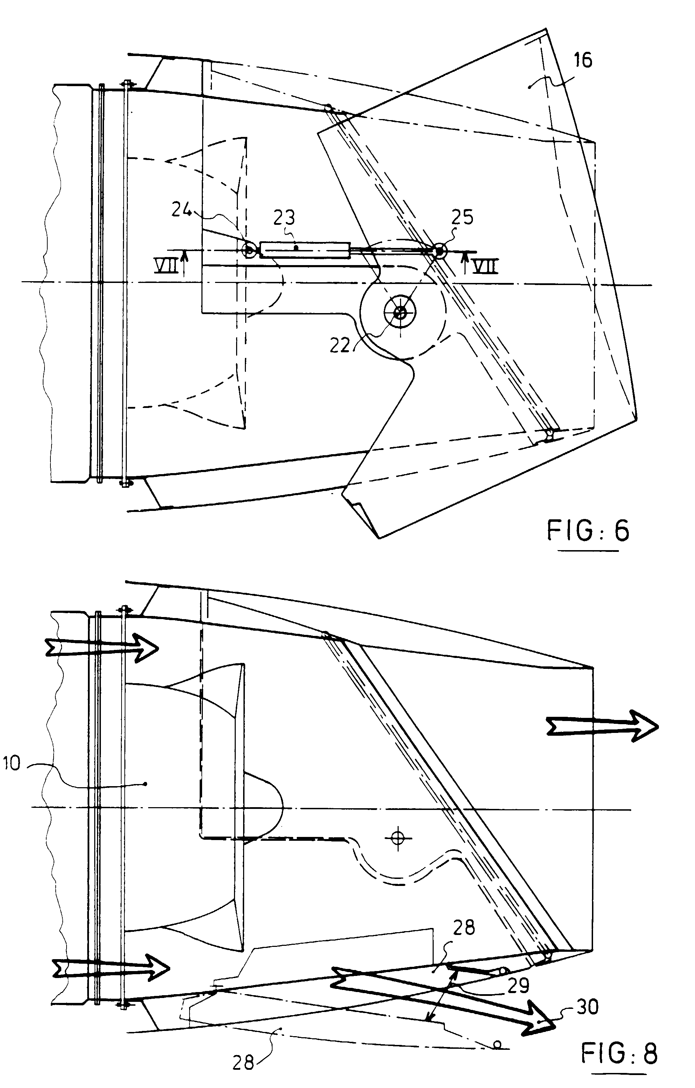

Les figures 2 et 3 représentant un inverseur de poussée conforme à l'invention montrent une structure fixe 10 dont la partie amont, de manière similaire à la réalisation antérieure connue et précédemment décrite en référence à la figure 1, est fixée en 11 du côté amont sur un carter externe 12 enveloppant le turboréacteur associé. Dans l'exemple d'application représenté sur les dessins, ledit turboréacteur est à double flux et le carter 12 constitue la paroi externe du conduit de la veine du flux secondaire symbolisé sur les figures 2 et 3 par les flèches 13. La structure fixe 10 est ainsi disposée dans le prolongement du carter 12 vers l'aval et constitue une partie de la paroi externe entourant la veine fluide. De manière remarquable et conforme à l'invention, la structure fixe 10 comporte une extrémité aval, amont et aval étant définis de manière classique par rapport au sens normal de circulation des flux du turboréacteur encore désigné de l'avant vers l'arrière, qui présente un bord évolutif 14 qui n'est pas contenu dans un plan perpendiculaire à l'axe géométrique 15 de rotation du turboréacteur.
Dans une réalisation simplifiée, ledit bord 14 peut être contenu dans un plan incliné d'un angle déterminé a sur ledit axe 15. Notamment par rapport à un montage sur avion en position normale, la structure fixe 10 présente dans ce cas une longueur inférieure à la partie supérieure ou haute et une longueur supérieure à la partie inférieure ou basse, comme cela est visible sur les figures 2 et 3. En fonction des applications et selon le type de montage sur avion retenu, les parties longue et courte diamétralement opposées de la structure fixe 10 peuvent être situées différemment.
Lors du fonctionnement en poussée directe correspondant à la configuration représentée sur la figure 2, le conduit du flux de turboréacteur est complété du côté aval par une coquille 16 qui se raccorde sur ladite structure fixe 10, avec interposition d'un joint d'étanchéité 17 le long dudit bord 14. Le bord de fuite 18 de la tuyère d'éjection associée au turboréacteur est ainsi constitué par l'extrémité aval de la coquille 16. La paroi extérieure 19 de la coquille 16 constitue la paroi externe de nacelle dans la partie où la paroi intérieure 20 de coquille constitue la paroi de tuyère d'éjection ainsi que dans une zone complémentaire 21 située en amont où la coquille 16 recouvre une partie de la structure fixe 10, notamment dans la partie supérieure ou haute dans l'exemple représenté sur la figure 2. La coquille 16 est montée pivotante sur la structure fixe 10 autour de deux pivots 22 latéraux situés de part et d'autre de la structure fixe 10. Suivant un mode préférentiel de réalisation, tel que représenté en exemple sur les figures 2 et 3, l'axe géométrique commun des pivots 22 est situé du côté opposé à la partie de la coquille 16 qui présente la plus grande longueur, c'est à dire dans la représentation donnée, sous l'axe 15 du turboréacteur.
La coquille 16 constitue la partie mobile de l'inverseur de poussée et est associée à un système de commande des déplacements composé de moyens connus en soi tels que vérin(s). Suivant une réalisation avantageuse, un vérin de commande 23, comme représenté sur les figures 6 et 7, peut être logé de chaque côté de la coquille 16, en amont des pivots 22 de la coquille. Chaque vérin 23 est monté de manière articulée d'une part sur un pivot 24 solidaire de la structure fixe 10 et, d'autre part, sur un pivot 25 solidaire de la coquille 16 et lié à l'extrémité de la tige du vérin 23. D'autres montages restent possibles et notamment, un vérin unique peut être utilisé, par exemple, situé au centre supérieur de la coquille 16.

Les figures 3, 5 et 6 montrent une configuration de l'inverseur de poussée en position de déviation de flux correspondant au fonctionnement en inversion de poussée, la position de la coquille 16 en poussée directe étant représentée en traits fins sur la figure 6. On relève plusieurs avantages ressortant des dispositions de l'invention. Toute interférence entre le bord de fuite 18 de tuyère et la structure fixe 10 est évitée lors du pivotement de la coquille 16 à laquelle ledit bord de fuite 18 est intégré. Une simplification extrême de la structure et un gain de masse associé résultent du fait que la coquille 16 constitue le seul élément structurel mobile. Une bonne rigidité de la coquille 16 est obtenue du fait de sa continuité circonférentielle dans sa partie aval et de son maintien par les deux pivots 22. Cette rigidité est améliorée en position fermée correspondant à la poussée directe par l'adjonction d'un ou plusieurs verrous dans la partie amont de la coquille 16 assurant un maintien supplémentaire entre la coquille 16 et la structure fixe 10. Une tenue satisfaisante de la géométrie de tuyère découle de cette rigidité. Une bonne rigidité de la structure fixe 10 est également assurée du fait que les zones d'attache des pivots 22 et des vérins 23 se situent sur une structure continue, en évitant tout évidement ou rupture de forme, ce qui assure également une bonne reprise des efforts. On note, en position déployée, qu'il subsiste une zone entre l'arrière 26 de la structure fixe 10 et l'arrière 27 de la coquille 16 où une partie du flux symbolisée par la flèche 13b n'est pas dirigée vers l'avant. Toutefois, la majorité du flux symbolisée par la flèche 13a est inversée car en effet le débit passant entre les parties 26 et 27 est minimisé et en outre, une partie du débit 13b est déviée radialement, ce qui réduit la poussée résiduelle. La contre poussée globale obtenue reste par conséquent acceptable.

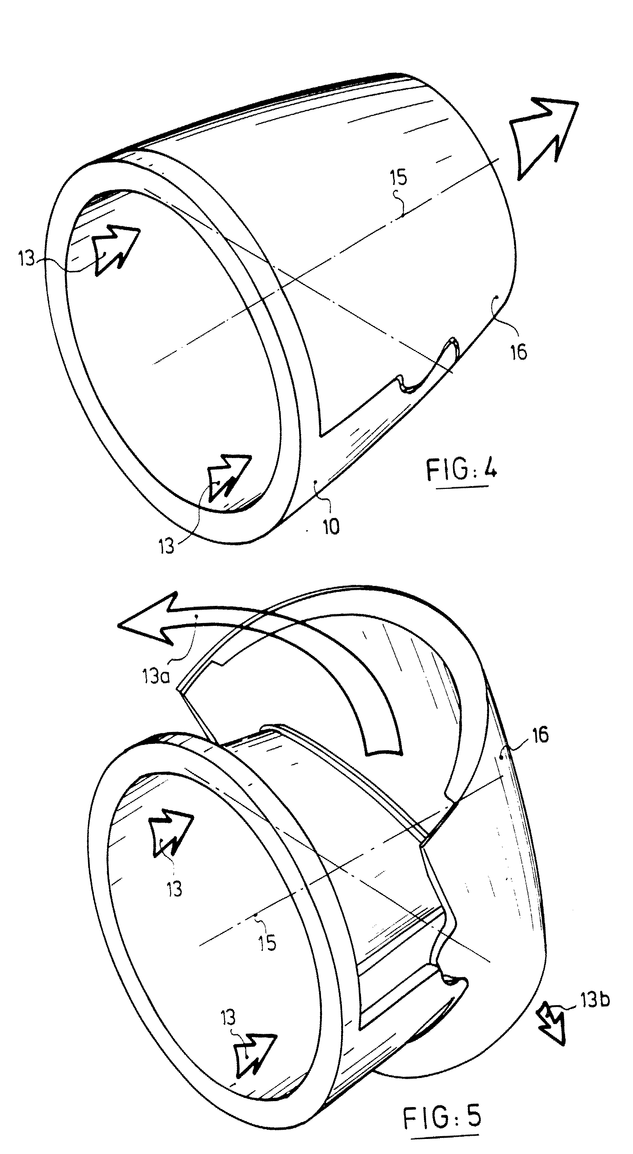

La disposition à coquille unique 16 par la direction privilégiée principale d'éjection des nappes du flux inversé présente des avantages et des facilités importantes d'installation sur avion en fonction des applications envisagées. Sur avion supersonique par exemple, le flux principal 13a inversé peut être dirigé vers le haut et vers l'amont au-dessus de l'aile de l'avion. Dans le cas d'une installation sous aile, les risques d'impacts des jets sur le fuselage de l'avion et/ou sur l'aile sont évités grâce à la maîtrise et à la possibilité de choix de la direction du flux principal inversé 13a.
Concernant le fonctionnement en poussée directe, d'autres avantages sont obtenus. La simplification du cheminement du joint d'étanchéité 17 à la limite arrière de la structure fixe 10 permet de réduire les risques de fuites. En outre une frontière réduite au niveau du conduit du flux est obtenue entre la structure fixe 10 et la coquille 16. Ces facteurs amènent une minimisation des pertes aérodynamiques en poussée directe.
Par ailleurs, les dispositions de l'invention permettent selon les applications et les conditions d'utilisation soit, d'assurer une position fermée de la coquille 16 qui est stable et auto-fermante, soit de procurer une aide à l'ouverture de la coquille 16 dès le début de la transition commandée de la position de poussée directe vers la position d'inversion de poussée. En fonction de l'effet désiré et en agissant sur certains paramètres tels que la position des pivots 22, la position de l'extrémité aval de la structure fixe, on peut en effet obtenir que la résultante des pressions s'exerçant sur la coquille 16 en position de poussée directe passe soit en amont des pivots 22, soit en aval des pivots 22, une position équilibrée étant également possible.
En variante et telle que représentée sur la figure 8, une disposition complémentaire à l'invention telle que précédemment décrite en référence aux figures 2 à 7 peut être adjointe. En effet, un ou plusieurs éléments pivotants tels que 28 peut être disposé sur la structure fixe 10. Lors du fonctionnement en poussée directe des ouvertures 29 peuvent ainsi être ménagées dans la paroi du conduit du flux permettant une évacuation vers l'aval d'une partie du débit du flux de turboréacteur symbolisé par la flèche 30. La tuyère d'éjection ainsi constituée devient à section variable et on obtient notamment dans ce cas une augmentation de la section d'éjection. Ledit (ou les) élément(s) pivotant(s) 28 est (sont) notamment logé(s) dans la zone de la structure fixe 10 présentant la plus grande longueur axiale, telle qu'elle résulte de sa définition précédemment décrite. Des moyens connus en soi et non représentés sur les dessins sont utilisés pour assurer la manoeuvre de l'élément pivotant 28.

## Revendications

1. Inverseur de poussée de turboréacteur disposé dans la partie aval de la tuyère d'éjection du turboréacteur caractérisé en ce qu'il comporte une structure fixe amont (10) dont l'extrémité aval présente un bord (14) qui n'est pas contenu dans un plan perpendiculaire à l'axe géométrique (15) de rotation du turboréacteur et une partie mobile constituée par une unique coquille (16) disposée, lors du fonctionnement en poussée directe, jointive et dans le prolongement aval de ladite structure fixe (10) de manière à constituer, en position fermée, la partie aval de la tuyère d'éjection du flux direct, comportant un bord de fuite (18) coplanaire et, en outre, susceptible de pivoter autour de deux pivots latéraux (22) situés de part et d'autre de ladite structure fixe (10) sous l'action d'un système de commande des déplacements comportant au moins un vérin (23) monté entre deux pivots solidaires l'un (24) de ladite structure fixe (10) et l'autre (25) de ladite coquille (16) de manière à constituer, en position déployée, un obstacle de déviation du flux des gaz en procurant une inversion de poussée.

2. Inverseur de poussée de turboréacteur selon la revendication 1 dans lequel un joint d'étanchéité (17) interposé entre la coquille (16) et la structure fixe (10) passe en aval des points pivot (22) et est installé parallèle au bord aval (14) de structure fixe.

3. Inverseur de poussée de turboréacteur selon l'une des revendications 1 ou 2 dans lequel ledit bord aval (14) de structure fixe est contenu dans un plan incliné suivant un angle déterminé a sur ledit axe géométrique (15) du turboréacteur.

4. Inverseur de poussée de turboréacteur selon l'une quelconque des revendications 1 à 3 dans lequel ledit système de commande est composé de deux vérins (23) logés chacun de chaque côté de la coquille (16), en amont des pivots (22) de la coquille (16).

5. Inverseur de poussée de turboréacteur selon l'une quelconque des revendications 1 à 3 dans lequel ledit système de commande est composé d'un vérin (23) situé au centre supérieur de la coquille (16).

6. Inverseur de poussée de turboréacteur selon l'une quelconque des revendications 1 à 3 dans lequel ledit système de commande est composé d'un vérin (23) logé d'un côté de la coquille (16), en amont des pivots (22) de la coquille (16).

7. Inverseur de poussée de turboréacteur selon l'une quelconque des revendications 1 à 6 dans lequel au moins un élément pivotant (28) complémentaire est disposé sur la structure fixe (10) dans une partie de paroi présentant la plus grande longueur axiale de manière à permettre, en position déployée, lors du fonctionnement en poussée directe, une évacuation vers l'aval d'une partie du débit (30) du flux du turboréacteur en procurant ainsi une augmentation de la section de la tuyère d'éjection.

## Patentansprüche

1. Schubumkehrvorrichtung für ein Strahltriebwerk, die im hinteren Teil der Schubdüse des Strahltriebwerks angeordnet ist,
**dadurch gekennzeichnet, daß** sie einen vorderen festen Aufbau (10) aufweist, dessen hinteres Ende eine Kante (14) hat, die nicht in einer senkrecht zur geometrischen Drehachse (15) des Strahltriebwerks verlaufenden Ebene liegt, sowie einen beweglichen Teil aufweist, der aus einer einzigen Klappe (16) besteht, die im Direktschubbetrieb in der rückwärtigen Verlängerung dieses festen Aufbaus (10) und verbunden mit diesem dergestalt angeordnet ist, daß sie in geschlossener Stellung den hinteren Teil der Schubdüse des Direktstrahls bildet, und die eine koplanare Hinterkante (18) aufweist und ferner um zwei seitliche Drehzapfen (22), die sich zu beiden Seiten dieses festen Aufbaus (10) befinden, schwenken kann, gesteuert durch ein Steuersystem für die Bewegungen, das mindestens einen Zylinder (23) aufweist, der zwischen zwei Drehzapfen sitzt, von denen einer (24) fest mit diesem festen Aufbau (10) und der andere (25) fest mit dieser Klappe (16) verbunden ist, so daß in ausgeklappter Stellung ein Umlenkhindernis für den Gasstrom gebildet wird, wobei dessen Schubumkehr gewährleistet wird.

2. Schubumkehrvorrichtung für ein Strahltriebwerk nach Anspruch 1, wobei eine Dichtung (17), die zwischen der Klappe (16) und dem festen Aufbau (10) angeordnet ist, hinter den Drehpunkten (22) verläuft und parallel zur Kante (14) des festen Aufbaus eingesetzt wird.

3. Schubumkehrvorrichtung für ein Strahltriebwerk nach einem der Ansprüche 1 oder 2, wobei diese hintere Kante (14) des festen Aufbaus sich in einer Ebene befindet, die in einem bestimmten Winkel a zu der genannten geometrischen Drehachse (15) des Strahltriebwerks verläuft.

4. Schubumkehrvorrichtung für ein Strahltriebwerk nach einem der Ansprüche 1 bis 3, wobei das genannte Steuersystem aus zwei Zylindern (23) besteht, die jeweils an jeder Seite der Klappe (16) vor den Drehzapfen (22) der Klappe (16) gelagert sind.

5. Schubumkehrvorrichtung für ein Strahltriebwerk nach einem der Ansprüche 1 bis 3, wobei das genannte Steuersystem aus einem Zylinder (23) besteht, der sich in der oberen Mitte der Klappe (16) befindet.

6. Schubumkehrvorrichtung für ein Strahltriebwerk nach einem der Ansprüche 1 bis 3, wobei das genannte Steuersystem aus einem Zylinder (23) besteht, der an einer Seite der Klappe (16) vor den Drehzapfen (22) der Klappe (16) gelagert ist.

7. Schubumkehrvorrichtung für ein Strahltriebwerk nach einem der Ansprüche 1 bis 6, wobei an dem festen Aufbau (10) in einem Wandteil mindestens ein komplementäres Schwenkelement (28) angeordnet ist, das die größte axiale Länge aufweist, so daß in ausgeklappter Stellung im Direktschubbetrieb ein Teil der Menge (30) des Triebwerkstrahls nach hinten freigesetzt werden kann und so eine Vergrößerung des Querschnitts der Schubdüse erreicht wird.

## Claims

1. A turbojet engine thrust reverser disposed in the downstream part of the engine exhaust nozzle, characterised in that it comprises a fixed upstream structure (10) whose downstream end has an edge (14) outside a plane perpendicular to the geometric rotational axis (15) of the engine, and a moving part in the form of a single shell (16) which is contiguous with the fixed structure (10) during forward thrust operation and in downstream extension thereof so as to form in the closed position the downstream part of the exhaust nozzle, the shell (16) comprising a coplanar trailing edge (18) and also being pivotable around two lateral pivots (22) disposed one on each side of the fixed structure (10) by means of an actuating system comprising at least one ram (23) mounted between two pivots (24, 25), the pivot (24) being rigidly secured to the fixed structure (10) and the pivot (25) being rigidly secured to the shell (16), so as to form, in the deployed position, an obstacle deflecting the gas flow and producing a thrust reversal.

2. A turbojet engine thrust reverser according to claim 1 wherein a seal (17) between the shell (16) and the fixed structure (10) extends downstream of the pivot points (22) and is installed parallel to the downstream edge (14) of the fixed structure.

3. A turbojet engine thrust reverser according to claim 1 or claim 2 wherein the downstream edge (14) of the fixed structure (10) is contained in a plane inclined at a predetermined angle a to the geometric axis (15) of the turbojet engine.

4. A turbojet engine thrust reverser according to any of claims 1 to 3 wherein the actuating system consists of two rams (23) disposed one on each side of the shell (16), upstream of the pivots (22) thereof.

5. A turbojet engine thrust reverser according to any of claims 1 to 3 wherein the actuating system consists of a ram (23) disposed at the top centre of the shell (16) .

6. A turbojet engine thrust reverser according to any of claims 1 to 3 wherein the actuating system consists of a ram (23) disposed on one side of the shell (16), upstream of the pivots (22) thereof.

7. A turbojet engine thrust reverser according to any of claims 1 to 6 wherein at least one supplementary pivotable element (28) is disposed on the fixed structure (10) in a wall part having the greatest axial length so as to facilitate, when deployed during forward thrust operation, a discharge in the downstream direction of some (30) of the flow discharged from the engine, with a resulting increase in the exhaust nozzle cross-section.
